# EUROPÄISCHE PATENTANMELDUNG

(11) **EP 0 838 710 A2**
(43) Veröffentlichungstag der Anmeldung: **29.04.1998**
(21) Anmeldenummer: 97830527.4
(22) Anmeldetag: 21.10.1997
(51) Int. Cl.: G02C 1/04

(54) **Brillengestell aus Draht mit Rand**

(30) Priorität: 22.10.1996 IT FI960245
(71) Anmelder: BOTTEGA D'ARTE IN FIRENZE S.R.L., 50136 Firenze (IT)
(72) Erfinder: Fortini, Paolo, 50141 Firenze (IT)
(74) Vertreter: Mannucci, Gianfranco, Dott.-Ing.

(57) **Zusammenfassung**

Es wird ein Brillengestell aus Draht beschrieben mit zwei Bügeln (13), die gelenkig mit einem Fassungsteil (1) für die Gläser (L) verbunden sind, wobei dieses Fassungsteil einen oberen Draht (3) und für jedes Glas einen unteren Draht (5) aufweist und wobei jeder der unteren Drähte (5) mit seinen Enden an dem oberen Draht (3) befestigt ist. An einem der Enden jedes unteren Drahts ist ein elastisches Element (9; 29; 39; 49) vorgesehen, um das Montieren der Gläser zu erleichtern.

## Beschreibung

Gegenstand der Erfindung ist ein Gestell aus Draht für eine sogenannte Brille mit Umrandung, d. h. eine Brille mit einer Haltekonstruktion für das Glas, die das Glas umschließt.

Die vorliegende Erfindung betrifft insbesondere ein Brillengestell aus (gegebenenfalls, jedoch nicht notwendigerweise, aus Metall bestehendem) Draht mit zwei Bügeln, die mit einem Gläserfassungsteil gelenkig verbunden sind, wobei dieses Fassungsteil einen oberen Draht und - für jedes Glas - einen unteren Draht aufweist und jeder der unteren Drähte mit seinen Enden an dem oberen Draht verankert ist.

Es wurden verschiedene Systeme zur Herstellung von Brillengestellen aus Metalldrähten entwickelt, die besonders leicht und widerstandsfähig sind. Bei einem ersten Typ von Brillengestellen ist keine Umrandung um die Gläser vorgesehen. Brillengestelle dieser Art sind beispielsweise in EP-B-0 256 098 und in WO-A-9602014 dargestellt.

Brillengestelle mit Rahmen sind normalerweise als eine monolitische Struktur aus Kunststoff ausgebildet, in welche die Gläser eingespannt werden. Es wurden auch Systeme erwogen, bei denen der untere Teil der Gläser von einem flexiblen Kunststoffdraht, z. B. aus "Nylon", umschlossen ist, wobei dieser Kunststoffdraht in einem System von in einem oberen Teil des Gestells angebrachten Haltelöchern verankert, dann gespannt und anschließend auf Maß geschnitten wird.

Eine Metalldrahtbrillengestell mit Rand ist in US-A-5 073 020 beschrieben. Der Zusammenbau der Drähte, die den oberen Teil und die unteren Teile des Randes bilden, ist besonders schwierig, da die Struktur relativ starr ist.

Ziel der Erfindung ist die Schaffung eines Brillengestells mit Umrandung, das besonders zuverlässig, preiswert, widerstandsfähig und insbesondere leicht zu montieren ist.

Ein spezielles Ziel der vorliegenden Erfindung ist die Schaffung einer Konstruktion aus Draht, die ein leichtes Montieren der Gläser ermöglicht, ohne daß besonders enge Bearbeitungstoleranzen zu beachten sind.

Die vorgenannten Ziele sowie weitere Ziele und Vorteile der Erfindung, die dem Fachmann durch die Lektüre des folgenden Textes verständlich werden, werden durch ein Gestell des oben beschriebenen Typs erreicht, bei dem an einem der Enden jedes Drahts, der das Glas unten umschließt, ein elastisches Element, z. B. Schraubendruckfeder oder vorzugsweise eine Schraubenzugfeder, vorgesehen ist.

Das elastische Element macht es möglich, daß die aus dem oberen Draht und den unteren Drähten gebildete Konstruktion gedehnt werden kann, um das Glas aufzunehmen, das zu diesem Zweck eine über den Umfang verlaufenden Nut aufweist, in die sich die Drähte einfügen. Die erhöhte Elastizität, die hier erreicht wird, gewährleistet eine zuverlässige Halterung, wobei weder bei der Herstellung der Fassung, noch bei der Ausbildung der entlang des Randes des Glases verlaufenden Nut oder beim Zuschnitt des Glases besonders strenge Bearbeitungstoleranzen berücksichtigt werden müssen.

Bei einer praktischen Ausführungsform der Erfindung ist das elastische Element im Bereich des seitlichen Endes des betreffenden unteren Drahts in der Nähe des Gelenks des zugehörigen Bügels angeordnet.

Wenn das elastische Element aus einer Schraubenzug- oder-druckfeder besteht, kann diese Feder aus einem Endabschnitt des jeweiligen unteren Drahts bestehen oder aber aus einem von dem Draht körperlich getrennten Stück hergestellt sein.

In der Praxis kann der obere Draht eine seitliche Schleife bilden, mit der das elastische Element in Eingriff steht, wobei sich diese Schleife zwischen dem oberen Drahtabschnitt, der von einer umlaufenden Nut des Glases aufgenommen werden soll, und einem entsprechenden Gelenk befindet, das zwischen dem Gläserfassungsteil und dem betreffenden Bügel angeordnet ist.

Der obere Draht, der in der Praxis auch einen Verbindungssteg zwischen den beiden Gläsern bildet, hat vorzugsweise einen größeren Durchmesser als die unteren Drähte. Auf diese Weise verringern sich die Gesamtabmessung und das Gesamtgewicht des Gestells, da die unteren Drähte weniger widerstandsfähig und steif sein müssen.

Bei einer möglichen Ausführungsform verlängern sich die unteren Drähte an ihren inneren Enden und bilden jeweils entsprechende Padstegflügel zum Abstützen des Gestells an der Nase, wobei diese inneren Enden so gebogen sind, daß sie eine Schleife für die Verankerung an dem oberen Draht bilden. Dabei bildet außerdem vorzugsweise jeder der unteren Drähte mit seinem im Bereich eines von dem oberen Draht gebildeten Stegs liegenden Ende einen Haken, der in eine von einem Padstegflügel gebildete Öse eingreift, wobei diese Öse auch mit dem oberen Draht in Eingriff steht. Diese Konfiguration läßt sich auch anwenden, wenn das oben erwähnte elastische Element fehlt, und kann deshalb auch bei andersartigen Brillengestellen mit Rand benutzt werden.

Weitere vorteilhafte Merkmale und Ausführungsformen gehen aus den anliegenden abhängigen Ansprüchen hervor.

Zum besseren Verständnis der Erfindung wird diese im folgenden an einem Ausführungsbeispiel näher erläutert, wobei auf die Zeichnungen Bezug genommen wird.
- Fig. 1: zeigt eine Frontansicht eines Brillengestells gemäß der Erfindung,
- Fig. 2: zeigt eine Seitenansicht entsprechend der Linie II-II von Fig. 1,
- Fig. 3: zeigt einen lokalen Schnitt entsprechend der Linie III-III von Fig. 1,
- Fig. 4: zeigt eine Ausführungsvariante in einer dem Schnitt von Fig. 3 entsprechenden Darstellung,
- Fig. 5: und 6 zeigen eine perspektivische bzw. eine Frontalansicht eines Brillenfassungsteils in einer abweichenden Ausführungsform ohne das eingesetzte Glas,
- Fig. 7: und 8 zeigen in Ansichten, die den Ansichten von Fig. 5 und 6 entsprechen, ein Gestell, das dem Gestell von Fig. 5 und 6 gleicht, jedoch mit eingesetztem Glas,
- Fig. 9: zeigt eine weitere Ausführungsform in einer Frontansicht,
- Fig. 10: und 11 zeigen Schnitte entsprechend den Linien X-X bzw. XI-XI von Fig. 9.

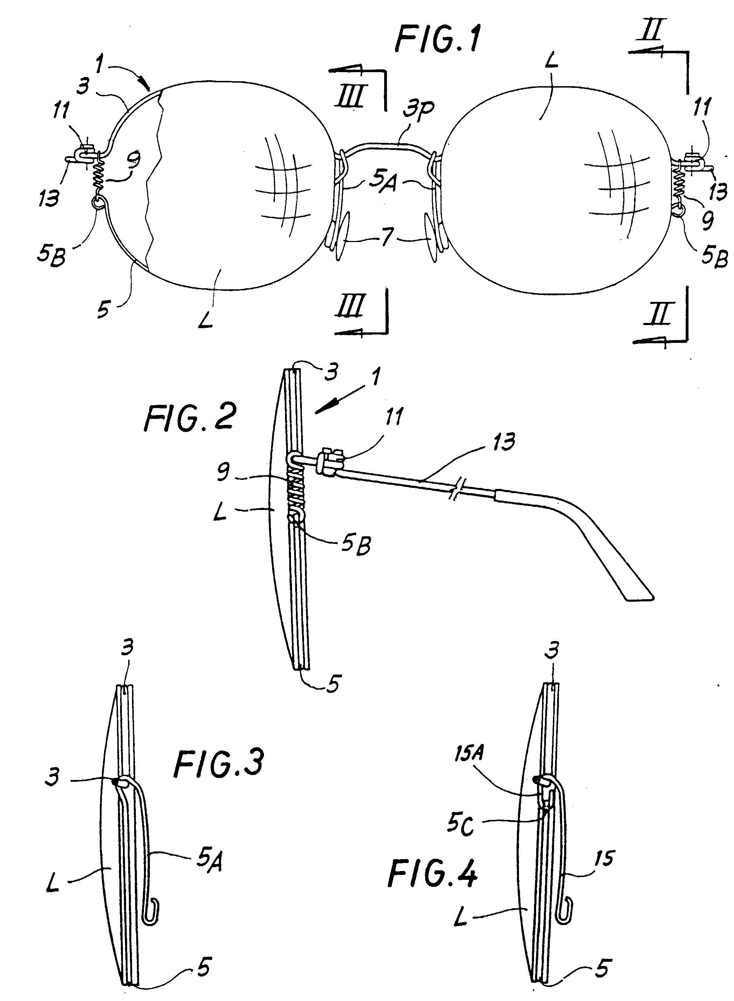

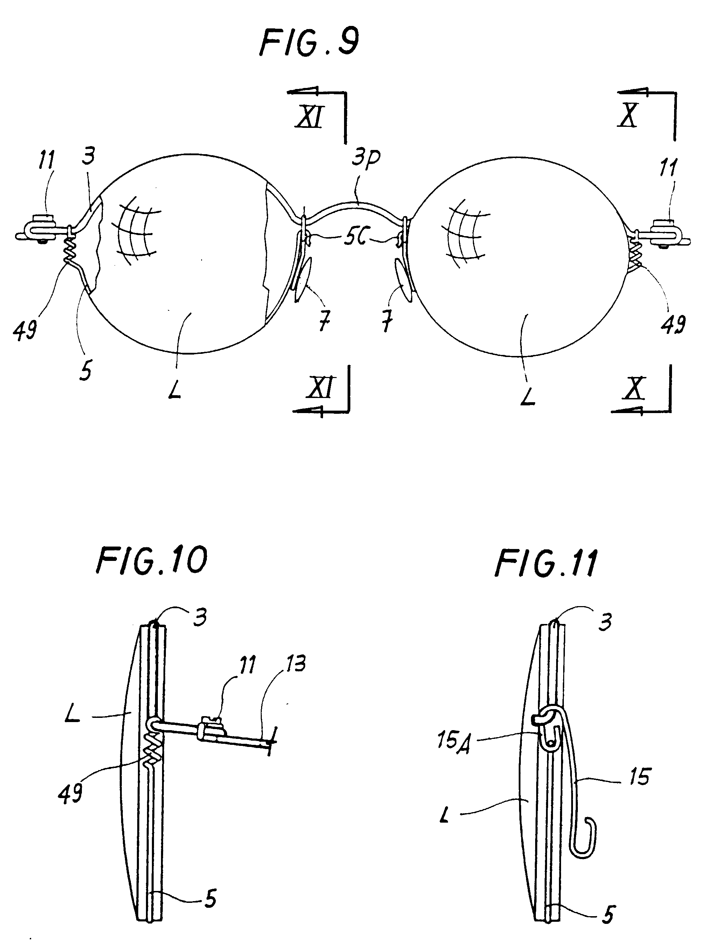

Es wird zunächst auf Fig. 1 bis 3 Bezug genommen. Das dort dargestellte Brillengestell besitzt eine insgesamt mit 1 bezeichnete Fassung, in der die Gläser L montiert sind. Diese Gläserfassung weist einen ersten oberen Draht 3 mit größerem Durchmesser auf, der die beiden Gläser L oben umschließt und in einer entlang des Randes der Gläser ausgebildeten Nut aufgenommen ist, die in Fig. 2 und 3 sichtbar ist. In der mittleren Zone bildet der Draht 3 einen Verbindungssteg 3P für die beiden Gläser L. Außer diesem ersten Draht 3 weist die Gläserfassung 1 zwei untere Drähte 5 auf, die jeweils die untere Zone eines der Gläser L umschließen. Der Durchmesser der Drähte 5 ist kleiner als der Durchmesser des Drahts 3. Die Drähte 3 und 5 bestehen vorzugsweise aus Metall. Die Verwendung anderer Materialien, z. B. von Kunststoffen, insbesondere für die unteren Drähte, ist jedoch ebenfalls möglich.

Jeder der Drähte 5 weist an seinem inneren Ende, d. h. an dem Ende, das dem Steg am nächsten liegt, einen gebogenen Abschnitt 5A auf, der eine Schleife für das Verhaken an dem Steg 3P bildet, der zu diesem Zweck zwei leichte Biegungen besitzt. Die Abschnitte 5A setzen sich weiter fort und bilden jeweils einen Träger für einen entsprechenden Padsteg 7, über den die Fassung sich an der Nase abstützt. Im Interesse einer besseren Übersichtlichkeit der Zeichnung ist dieser Padsteg in Fig. 3 weggelassen.

An dem entgegengesetzten Ende bilden die Drähte 5 jeweils eine Öse 5B, in die das erste hakenförmige Ende eines elastischen Elements 9 eingreift, das im vorliegenden Beispiel als Schraubenzugfeder ausgebildet ist. Diese Schraubenfedern 9 sind mit ihrem jeweils anderen Ende mit einem Teilstück des oberen Drahts 3 verhakt, das zwischen dem Glas L und einem Scharnier 11 liegt, das den Montageteil 1 mit einem Paar von Bügeln 13 verbindet, die vorteilhafterweise ebenfalls aus Metalldraht hergestellt sind. Die Scharniere 11 können vorteilhafterweise in der in WO-A-9602014 beschriebenen Weise oder in irgend einer anderen geeigneten Weise ausgebildet sein.

Bei der Variante von Fig. 4 endet jeder Draht 5 im Bereich des Stegs 3P in einem Haken 5C, die von einem aus einem Metalldrahtstück bestehenden Steg 15 gebildet wird, an deren der Öse 15C entgegengesetzten Ende der Padsteg 7 angebracht wird (der in Fig. 4 im Interesse einer übersichtlicheren Darstellung nicht gezeigt ist). Die Öse 15A umschließt im Bereich des Stegs 3P auch den Draht 3.

Die Fig. 4 dargestellte Konstruktion ist besonders vorteilhaft, weil sie weniger einengende Bearbeitungstoleranzen zuläßt und eine leichtere Montage ermöglicht.

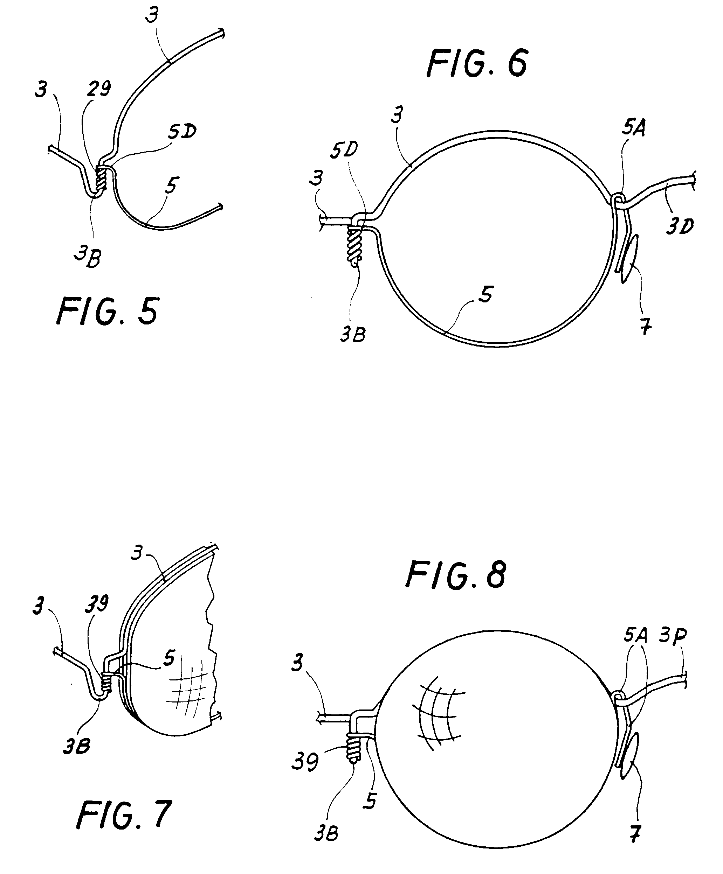

In Fig. 5 und 6, in denen gleiche Bezugszeichen gleiche oder entsprechende Teile bezeichnen, wie in Fig. 1 bis 3, besteht das elastische Element aus einer Schraubendruckfeder 29, die auf dem durchmessergrößeren Draht 3 aufgebracht ist, während der entsprechende untere Draht 5 eine Öse 5D bildet, die den oberen Draht 3 über der Druckfeder 29 umschlingt. Letztere ist so zwischen der Öse 5D und einer von dem Draht 3 gebildeten Schleife 3B gehalten.

Fig. 7 und 9 zeigen eine Ausführungsform, die der Ausführungsform von Fig. 5 und 6 analog ist, wobei jedoch in diesem Fall die Druckfeder 29 durch eine von dem Endbereich des entsprechenden Drahts 5 gebildete Druckfeder 39 ersetzt ist. Deshalb bildet in diesem Fall jeder Draht 5 sowohl das untere Fassungsteil des Glases L als auch das elastische Element.

Bei den Ausführungsformen von Fig. 5 bis 8 läßt sich für die Montage der Padstege auch die Lösung von Fig. 4 verwenden.

Fig. 9 bis 11 zeigen ein weiteres Ausführungsbeispiel, bei dem das (hier mit 49 bezeichnete) elastische Element, das hier die Form einer Schraubenzugfeder hat, wieder aus dem unteren Draht 5 gebildet ist. Die Windungen der Zugfeder 49 werden durch Umwickeln des Endbereichs des Drahts 3 gebildet. Die Schnittdarstellung von Fig. 11 zeigt die in diesem Beispiel benutzte Lösung für das Einhaken der Padstegflügel 15. Selbstverständlich sind auch andere Lösungen möglich, z. B. die Lösung von Fig. 3. Gleiche Bezugszeichen bezeichnen wieder gleiche oder entsprechende Teile wie in den vorangehend beschriebenen Ausführungsformen. Die Ausführungsform von Fig. 9 bis 11 ist besonders einfach, ökonomisch und leicht zu montieren und wird deshalb derzeit bevorzugt.

Die in den Zeichnungen dargestellten Beispiele dienen selbstverständlich nur zur praktischen Demonstration der Erfindung, die in ihren Formen und Anordnungen variiert werden kann, ohne daß damit das Konzept der erfindungsgemäßen Lehre verlassen wird. Eventuelle Bezugszeichen in den Ansprüchen sollen lediglich die Lektüre der Ansprüche unter Bezugnahme auf die Beschreibung und die Zeichnungen erleichtern und stellen keine Einschränkung des durch die Ansprüche definierten Schutzbereichs dar.

## Patentansprüche

1. Brillengestell aus Draht mit zwei Bügeln (13), die gelenkig mit einem Fassungsteil (1) für die Gläser (L) verbunden sind, wobei dieses Fassungsteil einen oberen Draht (3) und für jedes Glas einen unteren Draht (5) aufweist und wobei jeder der unteren Drähte (5) mit seinen Enden an dem oberen Draht (3) befestigt ist,
dadurch **gekennzeichnet**,
daß an einem der Enden jedes unteren Drahts ein elastisches Element (9; 29; 39; 49) vorgesehen ist.

2. Gestell nach Anspruch 1, dadurch **gekennzeichnet**, daß das elastische Element (9; 29; 39; 49) im Bereich des seitlichen Endes des betreffenden unteren Drahts (5) in der Nähe des Gelenks (11) des zugehörigen Bügels (13) angeordnet ist.

3. Gestell nach Anspruch 1 oder 2, dadurch **gekennzeichnet**, daß das elastische Element (9; 29; 39; 49) aus einer Schraubenfeder besteht.

4. Gestell nach Anspruch 3, dadurch **gekennzeichnet**, daß die Schraubenfeder (39; 49) von einem Endabschnitt des betreffenden unteren Drahts (5) gebildet wird.

5. Gestell nach Anspruch 3 oder 4, dadurch **gekennzeichnet**, daß die Feder eine Druckfeder (39) ist.

6. Gestell nach Anspruch 3, dadurch **gekennzeichnet**, daß die Schraubenfeder (9) aus einem Draht besteht, der von dem unteren Draht (5) und dem oberen Draht (3) körperlich getrennt ist.

7. Gestell nach Anspruch 5, dadurch **gekennzeichnet**, daß die Schraubenfeder (39) um einen Abschnitt des oberen Drahts (3) gewickelt ist.

8. Gestell nach Anspruch 6, dadurch **gekennzeichnet**, daß die Feder an ihren Enden Mittel für die Verbindung mit dem oberen Draht (3) bzw. mit dem unteren Draht (5) des Gestells aufweist und als Zugfeder ausgebildet ist.

9. Gestell nach Anspruch 8, dadurch **gekennzeichnet**, daß der die Windungen der Feder (9) bildende Draht an seinen Enden außerdem Ösen für das Einhaken an dem oberen Draht (3) und an dem unteren Draht (5) des Gestells bildet.

10. Gestell nach einem oder mehreren der vorhergehenden Ansprüche, dadurch **gekennzeichnet**, daß der obere Draht (3) eine seitliche Schleife (3B) bildet, mit der das elastische Element in Eingriff steht und die sich zwischen dem für die Aufnahme in einer umlaufenden Nut des Glases (L) bestimmten Abschnitt des oberen Drahts (3) und einem zwischen der Gläserfassung (1) und dem betreffenden Bügel (13) angeordneten Gelenk (11) befindet.

11. Gestell nach einem oder mehreren der vorhergehenden Ansprüche, dadurch **gekennzeichnet**, daß der obere Draht (3) einen größeren Durchmesser hat als die unteren Drähte (5).

12. Gestell nach einem oder mehreren der vorhergehenden Ansprüche, dadurch **gekennzeichnet**, daß die unteren Drähte (5) sich an ihren inneren Enden verlängern, um jeweils entsprechende Padstegflügel (5A, 7) zum Abstützen des Gestells an der Nase zu bilden, wobei diese inneren Enden so gebogen sind, daß sie eine Schleife für die Verankerung an dem oberen Draht bilden.

13. Gestell nach einem oder mehreren der Ansprüche 1 bis 11, dadurch **gekennzeichnet**, daß jeder der unteren Drähte (5) mit seinem im Bereich eines von dem oberen Draht (3) gebildeten Stegs (3P) liegenden Ende einen Haken (5C) bildet, der in eine von einem Padstegflügel (15) gebildete Öse (15A) eingreift, wobei diese Öse (15A) auch mit dem oberen Draht (3) in Eingriff steht.

14. Gestell nach Anspruch 13, dadurch **gekennzeichnet**, daß der Padstegflügel von einem Metalldrahtstück gebildet ist.

15. Gestell nach Anspruch 13 oder 14, dadurch **gekennzeichnet**, daß der obere Draht (3) zwei symmetrische Schleifen bildet, die zwischen sich den Brillensteg (3P) begrenzen, wobei die von den beiden Padstegflügeln (15) gebildeten Ösen (15A) im Bereich dieser symmetrischen Schleifen befestigt sind.

16. Brille mit einem Gestell und zwei Gläsern, dadurch **gekennzeichnet**, daß das Gestell nach einem oder mehreren der Ansprüche 1 bis 15 ausgeführt ist.
